Europäisches Patentamt

European Patent Office

Office européen des brevets

(19)

(11) Veröffentlichungsnummer : **0 143 395**
**B1**

(12)

# EUROPÄISCHE PATENTSCHRIFT

(45) Veröffentlichungstag der Patentschrift :
02.03.88

(21) Anmeldenummer : 84113759.9

(22) Anmeldetag : 14.11.84

(51) Int. Cl.⁴ : **C 04 B   7/43**

(54) Verfahren und Anlage zum Brennen von feinkörnigem Gut zur Herstellung von Zementklinker.

(30) Priorität : 18.11.83 DE 3341695

(43) Veröffentlichungstag der Anmeldung :
05.06.85 Patentblatt 85/23

(45) Bekanntmachung des Hinweises auf die Patenterteilung : 02.03.88 Patentblatt 88/09

(84) Benannte Vertragsstaaten :
AT BE CH DE FR GB LI NL

(56) Entgegenhaltungen :
EP-A- 0 001 404
DE-A- 3 016 642
FR-A- 2 281 333
FR-A- 2 380 998
FR-A- 2 394 503

(73) Patentinhaber : Klöckner-Humboldt-Deutz Aktiengesellschaft
Deutz-Mülheimer-Strasse 111 Postfach 80 05 09
D-5000 Köln 80 (DE)

L. & C. Steinmüller GmbH
Postfach 10 08 55/10 08 65 Fabrikstrasse 1
D-5270 Gummersbach 1 (DE)

(72) Erfinder : Becker, Jörgen
Lebrechtstrasse 20
D-5270 Gummersbach (DE)
Erfinder : Hendricks, Arno
Alter Hofweg 3
D-5223 Nümbrecht (DE)
Erfinder : Herchenbach, Horst
Sonnenweg 6
D-5202 Hennef 1 (DE)
Erfinder : Steinbiss, Eberhard
Höxterstrasse 18
D-5000 Köln 91 (DE)
Erfinder : Rensinghoff, Werner
Josephskirchstrasse 11
D-5000 Köln 91 (DE)

(74) Vertreter : Beisner, Klaus, Dipl.-Ing. et al
c/o KHD Humboldt Wedag AG Patente und Lizenzen
Wiersbergstrasse Postfach 91 04 57
D-5000 Köln 91 (DE)

**Beschreibung**

Die Erfindung betrifft ein Verfahren zur Wärmebehandlung von feinkörnigem Gut zur Herstellung von Zementklinker, das in einer aus Vorwärmstufe, Kalzinierstufe und Sinterstufe bestehenden Brennanlage thermisch behandelt wird, der im Bereich zwischen der Sinterstufe und der Kalzinierstufe über eine Bypassleitung wenigstens ein Teilstrom des Abgases der Sinterstufe, insbesondere an Schadstoffen wie Alkalien, Chlor oder Schwefel angereichertes Abgas (Bypassgas) entnommen wird, aus dem die Schadstoffe abgeschieden werden. Die Erfindung betrifft auch eine Anlage zur Durchführung des Verfahrens.

Zementrohmehle als Ausgangsstoffe für die Herstellung von Zement weisen oft unerwünschte Begleitstoffe wie Alkalien, Chloride und Schwefel auf. Auch in den zur thermischen Behandlung der Zementrohmehle eingesetzten Brennstoffen befinden sich oft unerwünschte Begleitelemente wie Schwefel oder auch Chlor, insbesondere wenn die Brennstoffe minderwertig sind. Besonders das Alkaliproblem ist in der Zementtechnologie in zweierlei Hinsicht von Bedeutung. Zum einen hat man erkannt, daß im Zement bereits geringe Mengen von Alkalioxiden zu Abbindestörungen im Zement führen. Zum anderen zeigen sich in modernen Zementbrennanlagen, die nach dem Schwebegastrockenverfahren arbeiten, besondere Schwierigkeiten durch hohe Alkali- und Schwefelgehalte im Zementrohmehl und/oder im Brennstoff. Diese Schwierigkeiten liegen nicht nur in einem veränderten Fließverhalten des Rohmehls im Wärmetauscher, sondern durch die Schadstoffe werden außerdem Verkrustungen und Ansatzbildungen in den gasführenden Leitungen verursacht, die eine einwandfreie Regelung beziehungsweise Steuerung der Brennanlage nicht mehr möglich machen. Dies kommt daher, weil sich unter den im Sinterofen, zum Beispiel Drehrohrofen der Brennanlage verflüchtigenden Stoffen auch die Alkaliverbindungen und der Schwefel befinden, die bei ihrer Kondensation aus dem Drehofenabgas klebrig werden und zu Anbackungen in den gasführenden Leitungen führen. Außerdem gelangen diese schädlichen Bestandteile mit dem Drehofenabgas in das Rohmehlvorwärmsystem, wo sie sich auf dem vergleichsweise kälteren Rohmehl niederschlagen und im Kreislauf mit dem vorgewärmten Rohmehl wieder in den Drehofen zurückgeführt werden, wodurch sich im Brennprozeß ein hochanreichernder Schadstoffkreislauf ausbilden kann. Zur Vermeidung dieses Nachteiles ist es bekannt (DE-OS 3 016 642), das heiße Drehofenabgas oder wenigstens einen Teil davon über eine Bypassleitung aus dem Brennprozeß abzuziehen, durch Zumischen von Kühlluft auf etwa 450 °C herunterzukühlen, danach von den Schadstoffen zu reinigen und anschließend zu verwerfen. Damit geht dem Brennprozeß aber der erhebliche Wärmeinhalt des thermisch hochwertigen Abgases des Drehrohrofens verloren, wodurch der gesamte Brennprozeß unwirtschaftlich werden kann. Besonders bei sehr großen Zementklinkerbrennanlagen ist es wärmewirtschaftlich nicht mehr vertretbar, zu viel schadstoffhaltige Drehofenabgase ohne Nutzung ihres Wärmeinhaltes zu verwerfen, da hierdurch die Zementherstellungskosten bei den heutigen und zukünftig zu erwartenden Energiepreisen zu hoch werden. Eine Verwertung des mit etwa 450 °C verworfenen und von seinen Schadstoffen größtenteils befreiten Bypassgases wäre zwar möglich ; sie ist jedoch aus thermodynamischen Gründen nicht mehr sehr wirtschaftlich. Außerdem wird bei der bekannten Bypassgasbehandlung das zu entstaubende Abgasvolumen durch die Zumischung von Frischluft im Gaskühler auf das bis zu 5-fache erhöht, wodurch die Gasreinigungseinrichtungen große Dimensionen erhalten müssen.

Der Erfindung liegt die Aufgabe zugrunde, beim Brennen von feinkörnigem Gut zur Herstellung von Zementklinker die Wirtschaftlichkeit von Bypass-Einrichtungen zu verbessern, die zur Steigerung der Produktqualität (low-alkali-cement) und zur Gewährleistung eines störungsfreien Brennprozesses vorhanden sein müssen.

Diese Aufgabe wird gemäß der Erfindung mit einem Verfahren und einer Anlage gelöst, die mit vorteilhaften Ausgestaltungen in den Ansprüchen 1 bis 16 gekennzeichnet sind.

Durch die Erfindung wird erstmals eine wirtschaftliche Abwärmeverwertung der Bypassgase von Zementklinkerbrennanlagen durch Nutzung des hohen thermischen Potentials dieser Bypassgase und Umwandlung in elektrische beziehungsweise mechanische Energie ermöglicht. Der im heißen Bypassgasstrom erfindungsgemäß eingesetzte Dampferzeuger arbeitet als Bypassgaskühler und gleichzeitig als Feststoffabscheider zur wenigstens teilweisen Reinigung des Bypassgases. Mit dem im Dampferzeuger erzeugten Dampf wird über eine Dampfturbine ein Generator angetrieben oder es werden über Getriebeturbinen und/oder Dampfmotoren direkt entsprechende Verbraucher in der Zementklinkerproduktionslinie angetrieben. Dadurch wird der spezifische Energieverbrauch einer Zementherstellungsanlage erheblich gesenkt. Je nach Bypassgas-Abzugsrate (0 bis 100 % Bypass) ist eine Einsparung an elektrischer Energie in der Höhe von 30 kWh/t Zement, das heißt von ca. 27 % des Gesamtverbrauchs (normal ca. 110 kWh/t Zement) an elektrischer Energie möglich. Neben der rationellen Energieausnutzung sind weitere Vorteile der Erfindung folgende :

Rohstoff-Versorgung : Durch die erfindungsgemäß ermöglichte wirtschaftliche Anwendung der Bypasstechnik kann eine weitergehende Ausbeutung von Rohstoff-Lagerstätten für die Zementherstellung, das heißt die Ausnutzung schadstoffreicherer (Alkalien, Chlor, Schwefel) Sohlen ins Auge gefaßt werden, was zu einer Verbreiterung der Rohstoffbasis führt.

Einsatz minderwertiger Brennstoffe : Der verstärkte Einsatz von Ersatzbrennstoffen und/oder Abfallstoffen im Kalzinator und/oder Sinterofen der Brennanlage zur Bereitstellung der für den Prozeß erforderlichen thermischen Energie ermöglicht eine Reduzierung der Brennstoffkosten. Gleichzeitig macht die Verbrennung solcher schadstoffreichen Abfallstoffe die Anwendung der Bypass-Technik erforderlich. Beim bisher bekannten Stand der Technik werden die bei den Brennstoffkosten erzielten Einsparungen durch die erforderlichen Maßnahmen für den Bypass (Verzicht auf die Verwertung der Abwärme, hohes zu entstaubendes Gasvolumen) wieder weitgehend aufgebraucht. Durch die Erfindung werden diese Nachteile vermieden und die Wirtschaftlichkeit beim Einsatz minderwertiger (Schadstoffe, geringer Heizwert) Brennstoffe wird gesteigert.

Gesteigerte Produktqualität : Durch die rationelle Abwärmeverwertung der Bypassabgase wird es unter wirtschaftlichen Gesichtspunkten möglich, die Bypass-Abzugsraten wesentlich zu steigern. Dadurch wird die wirtschaftliche Erzeugung von low-alkali-cement trotz schadstofffreicher Rohmaterialien ermöglicht.

Erhöhung der Wirtschaftlichkeit : Gegenüber dem bisherigen Stand der Technik, das heißt Abkühlung der über 1 000 °C heißen Bypass-Abgase auf ca. 450 °C durch Zumischen von Frischluft und/oder Wasser bringt die Anwendung der Erfindung folgende Verbesserung :

- Umrüsten vorhandener Bypass-Anlagen : Erhöhung der Bypassabzugsrate auf das über Dreifache bei gleichen Aggregategrößen, das heißt Einsatz schadstoffreicherer Rohmaterialien und/oder Ersatzbrennstoffe kann gesteigert werden.

- Neuanlagen : Verringerung des Abgasvolumens auf etwa ein Drittel, das heißt kleiner dimensionierte Entstaubungsapparate, Konditionierungstürme, Ventilatoren und dergleichen sind ausreichend.

Durch die hohe Bypassgas-Eingangstemperatur von etwa 1000 bis 1300 °C steigt der Wirkungsgrad des Dampferzeugers und es ist eine nahezu beliebige Kombination von Dampfdruck und Dampftemperatur einstellbar. Es besteht auch die Möglichkeit, das heiße ungekühlte Bypassgas in einem Überhitzerkessel zur Erzeugung von überhitztem Dampf auszunutzen, während ein vorgeschalteter Sattdampfkessel vom Abgas des Zementrohmehlvorwärmers und/oder von einem Teilstrom der Abluft des Klinkerkühlers betrieben wird.

Umweltschutz : die Bypass-Technik ist Voraussetzung für den Einsatz des Zementdrehofens zur Abfallverbrennung. Die Verwertung des Wärmeinhaltes der Bypass-Abgase gemäß der Erfindung läßt diesen Weg auch von der wirtschaftlichen Seite weitaus attraktiver erscheinen. Der Einsatz des Zementdrehofens und/oder Kalzinators zur Abfallverbrennung mit seinen bisher sehr guten Ergebnissen (Ausbrand, Schadstoffbeseitigung u. a.) wird damit zukünftig noch interessanter. Ein weiterer positiver Aspekt im Hinblick auf den Umweltschutz ist die Tatsache, daß durch die selektive Staubabscheidung im Dampferzeuger und in den gasseitig nachgeschalteten Entstaubungseinrichtungen Staubfraktionen mit unterschiedlichen Schadstoffkonzentrationen erzielt werden können. Dadurch ist es möglich, diesen Staub je nach Zusammensetzung teilweise in den Prozeß zurückzuführen oder für andere Einsatzzwecke wie Einsatz in der Düngemittelindustrie oder in der Baustoffindustrie aufzuwerten. Das Deponievolumen wird verringert. Der Bedarf an Wasser zur Bypassgaskonditionierung sowie der Staubauswurf werden durch das verringerte Reingasvolumen der Bypassabgase gesenkt.

Personalaufwand für den Betrieb des Dampferzeugers zur erfindungsgemäßen Abwärmeverwertung : Die Dampfkesselanlage zur Abwärmeverwertung kann mit automatisierten Heizflächen-Reinigungseinrichtungen ausgestattet werden. Da außerdem bei diesem Dampferzeuger keine Brenner betrieben werden, ist es möglich, die Anlage entsprechend den Technischen Regeln für Dampfkessel unter eingeschränkter beziehungsweise ohne ständige Beaufsichtigung zu betreiben. Das heißt, daß das vorhandene Personal zur Führung des Zementklinkerbrennprozesses in der Lage ist, die Dampfkesselüberwachung vorzunehmen.

Die Einbindung des Dampferzeugers zur erfindungsgemäßen Abwärmeverwertung der Bypassgase kann durch verschiedene Möglichkeiten verwirklicht werden. Der Dampferzeuger sollte schon aus Verfügbarkeitsgründen möglichst direkt an die Bypassgas-Entnahmestelle an der Guteinlaufkammer des Drehrohrofens angebunden werden. Dazu kann der ein- oder mehrzügige Dampfkessel oberhalb des Drehrohrofens in Portalbauweise errichtet werden. Nach einem besonderen Merkmal der Erfindung kann der Dampferzeuger außen an den in Stahlbau- oder Stahlbetonbauweise errichteten Zyklonschwebegas-Wärmetauscherturm des Zementrohmehlvorwärmers und -kalzinators einer Zementklinkerbrennanlage mit einfachen Mitteln angehängt werden.

Die Erfindung und deren weitere Vorteile und Merkmale werden anhand der in den Figuren schematisch dargestellten Ausführungsbeispiele näher erläutert. Es zeigt :

Fig. 1 eine erfindungsgemäße Brennanlage zur Herstellung von Zementklinker mit integriertem Dampferzeuger,

Fig. 2 schematisch eine Einbaumöglichkeit für den Dampferzeuger der Zementklinker-Brennanlage der Fig.1,

Fig. 3 detailliert vergrößert einen Vertikalschnitt durch den unmittelbaren Anschluß des Dampferzeugers am Anfang der Bypassgasleitung der Brennanlage und

Fig. 4 einen Horizontalschnitt längs der Linie IV-IV der Fig. 3.

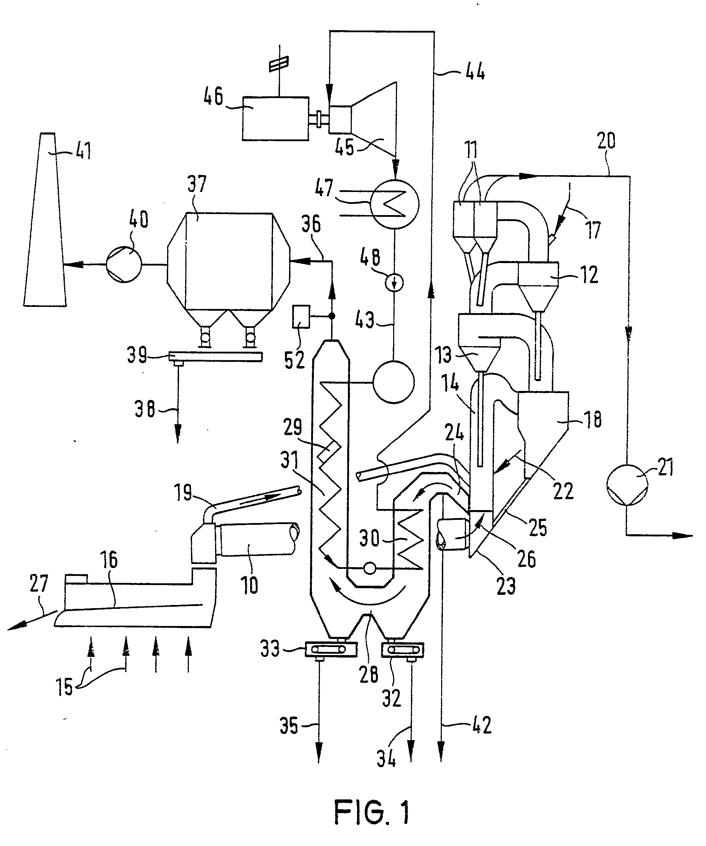

Die Brennanlage der Fig. 1 weist einen Drehrohrofen 10 auf, dem ein aus Zyklonwärmetauschern 11, 12, 13 bestehender Zementrohmehl-Vorwärmer und ein Kalzinator 14 vorgeschaltet und ein mit Kühlluft 15 versorgter Klinkerkühler 16 nachgeschaltet sind. Zementrohmehl 17 fließt von oben nach unten durch die Zyklonwärmetauscher 11, 12, 13 und durch den Kalzinator 14 mit daran angeschlossenen untersten Wärmetauscherzyklon 18 im kombinierten Gegenstrom/Gleichstrom zu den den Drehrohrofen 10 verlassenden heißen Abgasen und/oder zur heißen Abluft des Kühlers 16, die über Tertiärluftleitung 19 dem Kalzinator 14 zugeleitet wird. Die Abgase 20 werden durch das Saugzuggebläse 21 abgezogen. Zur hochgradigen Kalzinierung des Zementrohmehls wird in den Kalzinator 14, das heißt im vorliegenden Fall in den Drehofenabgaskanal Brennstoff 22 eingeführt. Im Drehofenabgaskanal zum Kalzinator beziehungsweise in der Decke der Guteinlaufkammer 23 des Drehrohrofens 10 oder seitlich davon ist eine Bypassleitung 24 zum Abzug von schadstoffhaltigem Drehofenabgas (Bypassgas) angeordnet, das Staubgehalte von etwa 100 g/Nm³ aufweisen kann.

Das kalzinierte Zementrohmehl tritt durch Leitung 25 in die Einlaufkammer 23 des Drehrohrofens 10 ein. Während durch den Pfeil 26 das Drehofenabgas angezeigt ist, ist durch den Pfeil 27 der fertiggebrannte und im Kühler 16 gekühlte Zementklinker angezeigt.

Erfindungsgemäß wird das Bypassgas über die Leitung 24 mit einer Temperatur von etwa 800 bis 1 350 °C, vorzugsweise 1 000 bis 1 200 °C in einem Dampferzeuger 28 auf eine Temperatur von etwa 200 bis 300 °C, zum Beispiel auf 220 bis 250 °C (oberhalb des Schwefelsäuretaupunktes) abgekühlt und durch periodisches oder kontinuierliches Abreinigen der Heizflächen des Dampferzeugers 28 werden in diesem wenigstens ein Teil der aus dem Bypassgas kondensierten Schadstoffe sowie gegebenenfalls teilentsäuerter Ofenstaub aus dem Bypassgas abgeschieden. Die Einrichtungen 29 zum Abreinigen der Heizflächen des Dampferzeugers 28 können beispielsweise aus Schwingungserzeugern und/oder pneumatischen Vorrichtungen bestehen, welche die Kesselheizflächen periodisch in Schwingungen versetzen können und in jedem Fall den sich bildenden Ansatz aus kondensierten Schadstoffen und teilentsäuertem Ofenstaub ablösen. Die im Bypassgas dampfförmig oder nebelartig vorhandenen Schadstoffe wie Chloride und/oder Sulfate können an den kalten Heizflächen des Dampferzeugers auch selektiv abgesetzt (kondensiert) und durch Abreinigen der Heizflächen selektiv, das heißt getrennt von mineralischen Partikeln aus dem Dampferzeuger ausgetragen werden. Der Dampferzeuger 28 ist vorzugsweise als zweizügiger Umlenkkessel ausgebildet mit einem das Bypassgas von etwa 1 000 bis 1 300 °C auf etwa 500 bis 600 °C abkühlenden Strahlungszug 30 und einem sich daran anschließenden, das Bypassgas auf etwa 220 bis 250 °C abkühlenden Konvektionszug 31. Am unteren Bereich des Strahlungszuges 30 und des Konvektionszuges 31 ist je ein Feststoffsammler mit daran angeschlossenem Austragsorgan 32 beziehungsweise 33 angeordnet, wobei aus dem Austragsorgan des Strahlungszuges 30 die bei höherer Temperatur aus dem Bypassgas kondensierten Schadstoffe 34 und aus dem Austragsorgan 32 des Konvektionszuges 31 die bei niedrigerer Temperatur kondensierten Schadstoffe 35 abgezogen werden, gegebenenfalls jeweils zusammen mit aus dem Bypassgas ausgeschiedenen teilentsäuerten Ofenstäuben. Das den Dampferzeuger 28 verlassende, auf etwa 220 bis 250 °C abgekühlte Bypassgas 36 wird in einem nachgeschalteten Filter, zum Beispiel elektrostatischen Staubabscheider 37 von den feinen Bypassgasstäuben 38 befreit, die über das Austragsorgan 39 abgezogen werden. Das Bypassgas wird durch den Dampferzeuger 28 sowie durch den Abscheider 37, der auch aus einem Gewebefilter bestehen kann, von einem Entstaubungsventilator 40 gesaugt, der schließlich das gereinigte Bypassgas zu einem Kamin 41 fördert. Dem Dampferzeuger 28 kann gasseitig ein Vorabscheider, zum Beispiel Umlenkabscheider zum Abscheiden der groben Bypassgasstäube 42, insbesondere des vom Bypassgas mitgerissenen teilentsäuerten Ofenstaubes vorgeschaltet sein, der gegebenenfalls zusammen mit dem bei höherer Temperatur kondensierten Staub 34, dessen Schadstoffkonzentration nicht so groß ist, in die Brennanlage rezirkuliert werden kann. Dagegen können die an Alkalichloriden und -sulfaten höher angereicherten Stäube 38 beispielsweise in der Düngemittelindustrie eingesetzt werden. Sind die Chloride und Sulfate weitgehend vollständig im Dampferzeuger 28 abgeschieden worden, so kann das Produkt 38 mit Vorteil als schadstoffarmes hydraulisches Bindemittel verkauft werden.

Der Wasser-/Dampfkreislauf des Dampferzeugers 28 ist so durch diesen geführt, daß die Kesselspeisewasserleitung 43 in den Konvektionszug 31 eintritt und die Dampfleitung 44 aus dem Strahlungszug 30 austritt. Die Dampfleitung 44 führt zu einer Entspannungsturbine 45 mit Stromgenerator 46 und/oder zu wenigstens einem Dampfmotor beziehungsweise einer Getriebeturbine. Der Generator 46 kann Stromverbraucher der Zementklinkerbrennanlage mit elektrischem Strom versorgen, zum Beispiel den elektrischen Antriebsmotor des hinter dem Zementrohmehlvorwärmer angeordneten Saugzuggebläses 21 oder andere Hauptverbraucher. Wird der im Dampferzeuger 28 erzeugte Dampf zu wenigstens einem Dampfmotor und/oder einer Getriebeturbine geleitet, können diese unmittelbar Arbeitsmaschinen der Zementklinkerbrennanlage, zum Beispiel Abgasventilatoren, Mühlen oder dergleichen antreiben. Im Kondensator 47 wird der Dampf kondensiert und als Kesselspeisewasser durch die Pumpe 48 dem Dampferzeuger 28 wieder zugeführt.

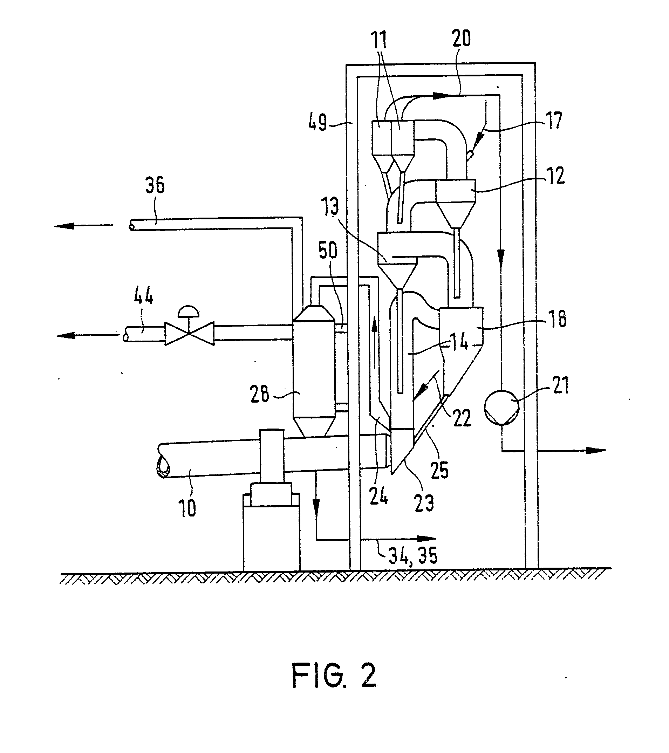

Die Einbindung des Abhitzekessels 28 zur Abwärmeverwertung der Bypassgase einer Zementklinkerbrennanlage kann durch verschiedene Möglichkeiten verwirklicht werden. Der Dampferzeuger sollte aus Verfügbarkeitsgründen möglichst direkt an die Bypassgasentnahmestelle an der Guteinlaufkammer 23 des Drehrohrofens 10 angebunden werden. Dazu kann der ein- oder mehrzügige Dampfkessel oberhalb des Drehrohrofens in Portalbauweise errichtet werden. Nach einem besonderen Merkmal der Erfindung ist, wie Fig. 2 zeigt, der Dampferzeuger 28 außen an den in Stahlbau- oder Stahlbetonbauweise errichteten Zyklonschwebegas- Wärmetauscherturm 49 des Zementrohmehlvorwärmers und -kalzinators in einfacher Weise mittels Halterungen 50 angehängt. Im übrigen sind bei der Zementklinkerbrennanlage der Fig. 2 die mit Fig. 1 übereinstimmenden Teile mit gleichen Bezugsziffern versehen.

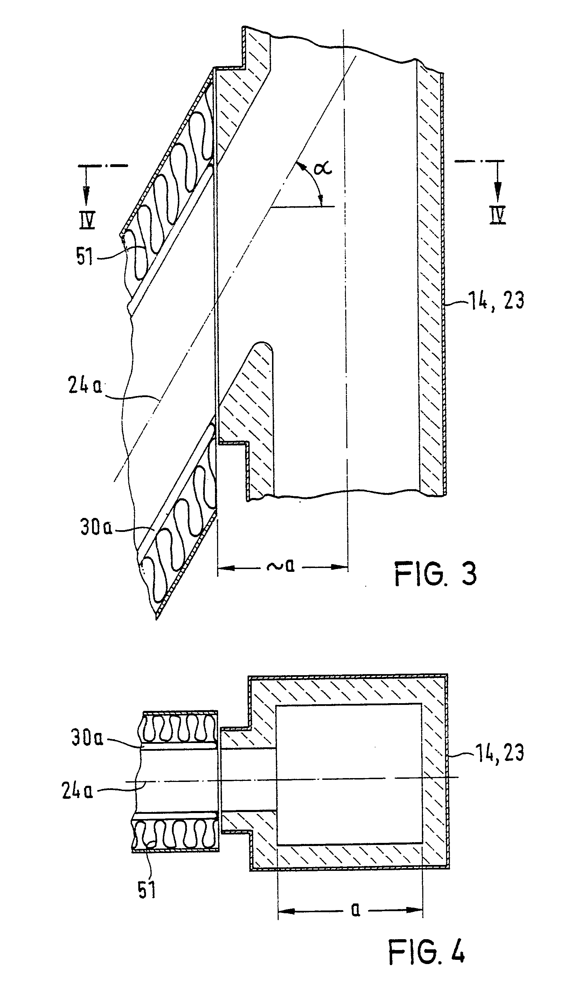

Aus dem Ausführungsbeispiel der Fig. 3 geht hervor, daß der Strahlungszug des Dampferzeugers 28 unmittelbar an die Guteinlaufkammer 23 des Drehrohrofens 10 oder an den Kalzinator 14 angesetzt ist über eine mit Kesselheizflächen 30a und Isolierung 51 versehene Bypassleitung 24a, die mit einem Winkel α von etwa 40 bis 75°, vorzugsweise 50 bis 60° zur Horizontalen schräg nach unten geneigt ist. Damit ist gewährleistet, daß die vom Bypassgas abzureinigenden beziehungsweise aus dem Bypassgas zu kondensierenden Materialien nicht in die Einlaufkammer 23 beziehungsweise den Drehrohrofen 10 zurückfallen können, wo sie eine Anbackungsgefahr verursachen würden. Fig. 4 zeigt, daß der Strahlungszug des Dampferzeugers 28 mit einem Abstand von etwa 0,5 bis 4a, im Beispiel 0,6a an die Guteinlaufkammer 23 oder an den Kalzinator 14 angeschlossen ist, wobei der Abstand a gleich der lichten Weite des Querschnitts der Einlaufkammer 23 beziehungsweise des Kalzinators 14 ist.

In Fig. 1 ist noch zu sehen, daß an die Bypassgasleitung 36 an einer Stelle vorzugsweise hinter dem Dampferzeuger 28 ein Analysator 52 zur Messung der Menge und/oder der Zusammensetzung des Bypassgases angeschlossen ist. Mit dem Analysator 52 kann der Bypassgasstrom 36 quantitativ und qualitativ sehr genau gemessen werden, weil die beim Stand der Technik zum Zweck der Bypassgasabkühlung erforderliche Wassereindüsung beziehungsweise Frischluftzufuhr, die das Meßergebnis verfälschen würde, durch die Erfindung vermieden ist. Infolge des genauen Meßergebnisses kann die gerade ausreichende Bypassgasabzugsrate genau eingestellt werden. Durch den durch die Erfindung möglich gewordenen Verzicht auf Frischluft- und/oder Wasserzufuhr in das Bypassgas, das heißt durch die Abkühlung der Drehofenabgase (Bypassgase) im Dampferzeuger ist es nunmehr leicht möglich, die Zusammensetzung der Ofenabgase genau zu bestimmen. In Kenntnis der Gasbestandteile wie zum Beispiel $CO_2$, $N_2$, $CO$, $SO_2$, $NO_x$ $O_2$ ist es möglich, den Brennprozeß hinsichtlich Energieverbrauch und Umweltverträglichkeit optimal zu steuern beziehungsweise zu regeln.

**Patentansprüche**

1. Verfahren zur Wärmebehandlung von feinkörnigem Gut zur Herstellung von Zementklinker, wobei das Gut in einer aus Vorwärmstufe, Kalziernierstufe und Sinterstufe bestehenden Brennanlage thermisch behandelt wird, und im Bereich zwischen der Sinterstufe und der Kalzinierstufe über eine Bypassleitung ein Teilstrom des Abgases der Sinterstufe, insbesondere ein an Schadstoffen wie Alkalien, Chlor oder Schwefel angereichertes Abgas (Bypassgas) entnommen wird, aus dem die Schadstoffe abgeschieden werden, dadurch gekennzeichnet, daß das Bypassgas mit einer Temperatur von etwa 800 bis 1 350 °C in einem Dampferzeuger auf eine Temperatur von etwa 200 bis 300 °C abgekühlt wird und daß durch Abreinigen der Heizflächen des Dampferzeugers in diesem wenigstens ein Teil der aus dem Bypassgas kondensierten Schadstoffe sowie gegebenenfalls mineralische Partikel wie teilentsäuerter Ofenstaub aus dem Bypassgas abgeschieden werden.

2. Verfahren nach Anspruch 1, dadurch gekennzeichnet, daß der im Dampferzeuger erzeugte Dampf zu einer Entspannungsturbine geleitet wird, die einen Generator antreibt, der Stromverbraucher der Brennanlage mit elektrischem Strom versorgt, zum Beispiel den elektrischen Antriebsmotor des hinter der Zementrohmehl-Vorwärmstufe angeordneten Saugzuggebläses.

3. Verfahren nach Anspruch 1, dadurch gekennzeichnet, daß der im Dampferzeuger erzeugte Dampf zu wenigstens einem Dampfmotor und/oder zu einer Getriebeturbine geleitet wird, welche unmittelbar Arbeitsmaschinen der Brennanlage, zum Beispiel Abgasventilatoren oder dergleichen antreiben.

4. Verfahren nach Anspruch 1, dadurch gekennzeichnet, daß aus dem Bypassgas die gröberen Partikel mit niedrigerem Schadstoffgehalt im Dampferzeuger abgeschieden werden, während die feineren Bypassgasstäube mit höherem Schadstoffgehalt in einem dem Dampferzeuger abgasseitig nachgeschalteten Filter abgeschieden werden.

5. Verfahren nach Anspruch 1, dadurch gekennzeichnet, daß die im Bypassgas dampfförmig oder nebelartig vorhandenen Schadstoffe wie Chloride und/oder Sulfate an den kalten Heizflächen des Dampferzeugers selektiv abgesetzt (kondensiert) und durch Abreinigen der Heizflächen selektiv aus dem Dampferzeuger ausgetragen werden.

6. Brennanlage zur Herstellung von Zementklinker aus Rohmehl, mit einem Rohmehlvorwärmer, Kalzinator, Sinterofen und Klinkerkühler, wobei im Bereich zwischen Sinterofen und Kalzinator eine Bypassleitung zum Abzug eines Teilstromes des Sinterofenabgases angeordnet ist, dadurch gekennzeichnet, daß die Bypassleitung (24, 24a) mit einem Dampferzeuger (28) verbunden ist, der mit Einrichtungen (29) zum Abreinigen seiner Heizflächen und zum Austrag der im Dampferzeuger aus dem Bypassgas abgeschiedenen Schadstoffe sowie gegebenenfalls ausgeschiedener mineralischer Partikel ausgestattet ist.

7. Brennanlage nach Anspruch 6, dadurch gekennzeichnet, daß der Dampferzeuger (28) als zweizügiger Umlenkkessel ausgebildet ist mit einem das Bypassgas von etwa 800 bis 1350°C, vorzugsweise 1000 bis 1200°C auf etwa 500 bis 600°C abkühlenden Strahlungszug (30) und einem sich daran anschließenden, das Bypassgas auf etwa 200 bis 300°C abkühlenden Konvektionszug (31).

8. Brennanlage nach Anspruch 7, dadurch gekennzeichnet, daß am unteren Bereich des Strahlungszuges (30) und des Konvektionszuges (31) je ein Feststoffsammler mit daran angeschlossenem Austragsorgan (32, 33) angeordnet ist, wobei aus dem Austragsorgan (32) des Strahlungszuges (30) die bei höherer Temperatur aus dem Bypassgas kondensierten Schadstoffe (34) und aus dem Austragsorgan (33) des Konvektionszuges (31) die bei niedrigerer Temperatur kondensierten Schadstoffe (35), jeweils zusammen mit aus dem Bypassgas gegebenenfalls ausgeschiedenen mineralischen Partikeln, abgezogen werden.

9. Brennanlage nach einem oder mehreren der Ansprüche 6 bis 8, dadurch gekennzeichnet, daß dem Dampferzeuger (28) abgasseitig ein Filter (37), zum Beispiel elektrostatischer Staubabscheider zum Abscheiden der feinen Bypassgasstäube (38) nachgeschaltet ist.

10. Brennanlage nach einem oder mehreren der Ansprüche 6 bis 9, dadurch gekennzeichnet, daß dem Dampferzeuger (28) gasseitig ein Vorabscheider zum Abscheiden der groben Bypassgasstäube 42 vorgeschaltet ist.

11. Brennanlage nach einem der Ansprüche 6 bis 10, dadurch gekennzeichnet, daß der Wasser-/Dampfkreislauf des Dampferzeugers (28) so durch diesen geführt ist, daß die Kesselspeisewasserleitung (43) in den Konvektionszug (31) eintritt und die Dampfleitung (44) aus dem Strahlungszug (30) austritt und daß die Dampfleitung zu einer Dampfturbine (45) mit Stromgenerator (46) und/oder zu wenigstens einem Dampfmotor beziehungsweise einer Getriebeturbine führt.

12. Brennanlage nach Anspruch 6, dadurch gekennzeichnet, daß der Dampferzeuger (28) außen an den Zyklonschwebegas-Wärmetauscherturm des Zementrohmehlvorwärmers und -kalzinators angehängt ist.

13. Brennanlage nach Anspruch 6, dadurch gekennzeichnet, daß der Dampferzeuger oberhalb des Zementklinker-Drehrohrofens im Bereich von dessen Guteinlaufkammer in Portalbauweise angeordnet ist.

14. Brennanlage nach Anspruch 7, dadurch gekennzeichnet, daß der Strahlungszug (30) des Dampferzeugers (28) unmittelbar an die Guteinlaufkammer (23) des Drehrohrofens (10) oder an den Kalzinator (14) angesetzt ist über eine mit Kesselheizflächen (30a) versehene Bypassleitung (24a), die mit einem Winkel (α) von etwa 40 bis 75°, vorzugsweise 50 bis 60° zur Horizontalen schräg nach unten geneigt ist.

15. Brennanlage nach Anspruch 14, dadurch gekennzeichnet, daß der Strahlungszug des Dampferzeugers (28) mit einem Abstand von etwa 0,5 bis 4a an die Guteinlaufkammer (23) oder an den Kalzinator (14) angeschlossen ist, wobei der Abstand (a) gleich der lichten Weite des Querschnitts der Einlaufkammer (23) beziehungsweise des Kalzinators (14) ist.

16. Brennanlage nach einem oder mehreren der Ansprüche 6 bis 15, dadurch gekennzeichnet, daß an die Bypassgasleitung (36) an einer Stelle vorzugsweise hinter dem Dampferzeuger (28) ein Analysator (52) zur Messung der Menge und/oder der Zusammensetzung des Bypassgases angeschlossen ist.

## Claims

1. A process for the heat treatment of fine-grained material for the production of cement clinker, wherein the material is thermally treated in a burning plant consisting of preheating stage, calcining stage and sintering stage, and a component stream of the waste gas from the sintering stage, particularly a waste gas enriched in harmful substances such as alkalis, chlorine or sulphur (by-pass gas) is taken off in the region between the sintering stage and the calcining stage, through a by-pass line, out of which waste gas the harmful substances are separated, characterised in that the by-pass gas with a temperature from about 800 to 1 350 °C is cooled in a steam generator to a temperature from sbout 200 to 300 °C and that at least some of the harmful substances condensed out of the by-pass gas as well as any mineral particles such as partially deacidified kiln dust is separated out of the by-pass gas in the steam generator by cleaning down the heating surfaces of this.

2. A process according to Claim 1, characterised in that the steam generated in the steam generator is conveyed to an expansion turbine which drives a generator which supplies current consumers of the burning plant with electric current, for example the electric driving motor of the induced-draught blower disposed behind the preheating stage for the raw powdered cement.

3. A process according to Claim 1, characterised in that the steam generated in the steam generator is conveyed to at least one steam engine and/or to a geared turbine which directly drive machines of the burning plant, for example waste-gas fans or the like.

4. A process according to Claim 1, characterised in that the coarser particles with a lower content of harmful substances are separated out of the by-pass gas in the steam generator while the finer by-pass gas dusts with a higher content of harmful substances are separated out in a filter following the steam generator at the waste-gas side.

5. A process according to Claim 1, characterised in that the harmful substances present in the by-pass gas in the form of vapour or mist such as chlorides and/or sulphates are selectively deposited (condensed) on the cold heating surfaces of the steam generator and are selectively removed from the steam generator by cleaning the heating surfaces.

6. A burning plant for producing cement clinker from powdered raw material, having a preheater for the powdered raw material, calcinator, sintering furnace and clinker cooler, wherein a by-pass line is disposed in the region between sintering furnace and calcinator to draw off a component stream of the waste gas from the sintering furnace, characterised in that the by-pass line (24, 24a) is connected to a steam generator (28) which is equipped with devices (29) for cleaning down its heating surfaces end for the discharge of the harmful substances separated out of the by-pass gas in the steam generator as well as any mineral particles which are separated out.

7. A burning plant according to Claim 6, characterised in that the steam generator (28) is constructed in the form of a two-pass turn-round boiler with a radiation pass (30) cooling the by-pass gas from about 800 to 1 350 °C, preferably 1 000 to 1 200 °C to about 500 to 600 °C and a following convection pass (31) cooling the by-pass gas to about 200 to 300 °C.

8. A burning plant according to Claim 7, characterised in that both at the lower region of the radiation pass (30) end of the convection pass (31) there is disposed a solids collector with a discharge member (32, 33) connected thereto, and the harmful substances (34) condensed out of the by-pass gas at a higher temperature are drawn off from the discharge member (32) of the radiation pass (30) and the harmful substances (35) condensed at a lower temperature are drawn off from the discharge member (33) of the convection pass (31), each together with the mineral particles which may have been separated out of the by-pass gas.

9. A burning plant according to one or more of Claims 6 to 8, characterised in that the steam generator (28) is followed at the waste-gas side by a filter (37), for example an electrostatic dust separator for separating out the fine by-pass gas dusts (38).

10. A burning plant according to one or more of Claims 6 to 9, characterised in that the steam generator (28) is preceded at the gas side by a preliminary filter to separate out the coarse by-pass gas dusts (42).

11. A burning plant according to any one of Claims 6 to 10, characterised in that the water/steam circulation of the steam generator (28) is taken through this so that the boiler feedwater pipe (43) enters the convection pass (31) and the steam pipe (44) emerges from the radiation pass (30) and that the steam pipe leads to a steam turbine (45) with a current generator (46) and/or to at least one steam engine or one geared turbine.

12. A burning plant according to Claim 6, characterised in that the steam generator (28) is attached externally to the cyclone suspension-type heat-exchanger tower of the raw powdered cement preheater and calcinator.

13. A burning plant according to Claim 6, characterised in that the steam generator is mounted by the portal method of construction above the rotary kiln for the cement clinker in the region of its material inlet chamber.

14. A burning plant according to Claim 7, characterised in that the radiation pass (30) of the steam generator (28) is attached directly to the material inlet chamber (23) of the rotary kiln (10) or to the calcinator (14) through a by-pass line (24a) which is provided with boiler heating surfaces (30a) and is inclined obliquely downwards at an angle (α) of about 40 to 75°, preferably 50 to 60° to the horizontal.

15. A burning plant according to Claim 14, characterised in that the radiation pass of the steam generator (28) is connected to the material inlet chamber (23) or to the calcinator (14) with a spacing of about 0.5 to 4a, the distance (a) being equal to the internal width of the cross-section of the inlet chamber (23) or of the calcinator (14).

16. A burning plant according to one or more of Claims 6 to 15, characterised in that an analyzer (52) is connected to the by-pass gas pipe (36) at one point, preferably behind the steam generator (28) to measure the amount and/or the composition of the by-pass gas.

**Revendications**

1. Procédé de traitement thermique d'un produit à grains fins en vue de la fabrication de klinker de ciment, le produit étant traité thermiquement dans une installation de cuisson se composant d'un étage de préchauffage, d'un étage de calcination et d'un étage de frittage et, dans une zone située entre l'état de frittage et l'étage de calcination, un courant partiel du gaz effluent provenant de l'étage de frittage, notamment un gaz effluent (gaz de dérivation) enrichi en substances nocives comme des alcalis, du chlore ou du soufre, est déchargé par l'intermédiaire d'un conduit de dérivation de façon à enlever de ce courant partiel les substances nocives, caractérisé en ce que le gaz de dérivation, ayant une température d'environ 800 à 1 350 °C, est refroidi dans un générateur de vapeur jusqu'à une température d'environ 200 à 300 °C et en ce que, par nettoyage des surfaces de chauffe du générateur de vapeur, dans ce dernier au moins une partie des substances nocives condensées à partir du gaz de dérivation ainsi que le cas échéant des particules minérales comme de la poussière de four partiellement désacidifiée, sont séparées du gaz de dérivation.

2. Procédé selon la revendication 1, caractérisé en ce que la vapeur produite par le générateur de vapeur est canalisée jusqu'à une turbine de détente qui entraîne une génératrice qui alimente en courant électrique les consommateurs de courant de l'installation de cuisson, par exemple le moteur électrique d'entraînement du ventilateur d'aspiration disposé en arrière de l'étage de préchauffage de la farine de ciment.

3. Procédé selon la revendication 1, caractérisé en ce que la vapeur produite dans le générateur de vapeur est canalisée jusqu'à au moins un moteur à vapeur et/ou une turbine de transmission, qui entraînent directement des machines de travail de l'installation de cuisson, par exemple des ventilateurs de gaz effluent ou analogues.

4. Procédé selon la revendication 1, caractérisé en ce que les particules grossières ayant une faible teneur en substances nocives sont séparées du gaz de dérivation dans le générateur de vapeur tandis que les poussières plus fines du gaz de dérivation, ayant une plus grande teneur en substances nocives, sont séparées dans un filtre placé en aval du générateur de vapeur du côté du gaz effluent.

5. Procédé selon la revendication 1, caractérisé en ce que les substances nocives se trouvant dans le gaz de dérivation sous forme de vapeur ou de brouillard, comme des chlorures et/ou des sulfates, sont déposées sélectivement (par condensation) sur les surfaces de chauffe froides du générateur de vapeur et sont évacuées sélectivement du générateur de vapeur par nettoyage des surfaces de chauffe.

6. Installation de cuisson pour la fabrication de klinker de ciment à partir de farine brute, comportant un préchauffeur de farine brute, un calcinateur, un four de frittage et un refroidisseur de klinker, un conduit de dérivation étant disposé, dans une zone située entre le four de frittage et le calcinateur, en vue de décharger un courant partiel du gaz sortant du four de frittage, caractérisée en ce que le conduit de dérivation (24, 24a) est relié à un générateur de vapeur (28) qui est équipé de dispositifs (29) servant à nettoyer ses surfaces de chauffe et à évacuer les substances nocives qui ont été séparées du gaz de dérivation dans le générateur de vapeur ainsi que le cas échéant des particules minérales séparées.

7. Installation de cuisson selon la revendication 6, caractérisée en ce que le générateur de vapeur (28) est agencé comme une chaudière réversible à deux voies, qui comporte une voie de rayonnement (30) refroidissant le gaz de dérivation depuis environ 800 à 1 350 °C, de préférence de 1 000 à 1 200 °C, jusqu'à environ 500 à 600 °C, ainsi qu'une voie de convection (31) placée à la suite et refroidissant le gaz de dérivation jusqu'à environ 200 à 300 °C.

8. Installation de cuisson selon la revendication 7, caractérisée en ce qu'il est prévu dans une zone inférieure de la voie de rayonnement (30) et de la voie de convection (31) respectivement un collecteur de solides auquel est relié un organe de décharge respectif (32, 33), de telle sorte que les substances nocives (34), condensées à partir du gaz de dérivation à une température supérieure et sortant par l'organe de décharge (32) de la voie de rayonnement (30), ainsi que les substances nocives (35) condensées à une température inférieure et provenant de l'organe de décharge (33) de la voie de convection (31) soient évacuées respectivement en même temps que des particules minérales séparées le cas échéant du gaz de dérivation.

9. Installation de cuisson selon une ou plusieurs des revendications 6 à 8, caractérisée en ce qu'il est prévu en aval du générateur de vapeur (28), du côté de sortie de gaz, un filtre (37), par exemple un dépoussiéreur électrostatique servant à séparer les fines poussières (38) du gaz de dérivation.

10. Installation de cuisson selon une ou plusieurs des revendications 6 à 9, caractérisée en ce qu'il est prévu en amont du générateur de vapeur (28), du côté d'entrée de gaz, un pré-séparateur servant à séparer les poussières grossières (42) du gaz de dérivation.

11. Installation de cuisson selon une des revendications 6 à 10, caractérisée en ce que le circuit eau/vapeur du générateur de vapeur (28) est établi au travers de celui-ci de telle sorte que le conduit d'eau alimentaire (43) de la chaudière pénètre dans la voie de convection (31) et que le conduit de vapeur (44) sorte du conduit de rayonnement (30), et en ce que le conduit de vapeur aboutit à une turbine à vapeur (45) associée à une génératrice de courant (46) et/ou à au moins un moteur à vapeur ou une turbine de transmission.

12. Installation de cuisson selon la revendication 6, caractérisée en ce que le générateur de vapeur (28) est suspendu extérieurement à la tour de préchauffage par mise en suspension dans les gaz avec cyclone, associée au préchauffeur et au calcinateur de farine brute de ciment.

13. Installation de cuisson selon la revendication 6, caractérisée en ce que le générateur de vapeur est disposé, avec une structure en portique, au-dessus du four tubulaire rotatif à klinker de ciment dans une zone de sa chambre d'entrée de produit.

14. Installation de cuisson selon la revendication 7, caractérisée en ce que la voie de rayonnement (30) du générateur de vapeur (28) est installée directement à côté de la chambre d'entrée de produit (23) du four tubulaire rotatif (10) ou du calcinateur (14) par l'intermédiaire d'un conduit de dérivation (24a), pourvu de surfaces de chauffe de chaudière (30a), qui sont inclinées en oblique vers le bas par rapport à l'horizontal d'un angle (α) d'environ 40 à 75°, de préférence de 50 à 60°.

15. Installation de cuisson selon la revendication 4, caractérisée en ce que la voie de rayonnement du générateur (28) est reliée, à une distance d'environ 0,5 à 4a, à la chambre d'entrée de produit (23) ou bien au calcinateur (14), la distance (a) étant égale à la dimension intérieure de la section droite de la chambre d'entrée (23) ou du calcinateur (14).

16. Installation de cuisson selon une ou plusieurs des revendications 6 à 15, caractérisée en ce que le conduit de gaz de dérivation (36) est relié, en un endroit situé de préférence en arrière du générateur de vapeur (28), à un analyseur (52) servant à mesurer la quantité et/ou la composition du gaz de dérivation.

FIG. 1

FIG. 2

FIG. 3

FIG. 4